# EUROPÄISCHE PATENTSCHRIFT

(11) **EP 0 712 867 B1**
(45) Veröffentlichungstag und Bekanntmachung des Hinweises auf die Patenterteilung: **14.07.1999**
(21) Anmeldenummer: 95810705.4
(22) Anmeldetag: 09.11.1995
(51) Int. Cl.: C08F 8/12, G02B 1/04

(54) **Polymere Netzwerke aus wasserlöslichen Präpolymeren**
Polymer networks of water-soluble prepolymers
Réseaux polymères à partir de prépolymères solubles dans l'eau

(30) Priorität: 18.11.1994 EP 94810655
(43) Veröffentlichungstag der Anmeldung: 22.05.1996
(73) Patentinhaber: Novartis AG, 4058 Basel (CH)
(72) Erfinder: Pöhlmann, Thomas, Dr., D-63843 Niedernberg (DE); Müller, Achim, Dr., D-63741 Aschaffenburg (DE); Seiferling, Bernhard, Dr., D-63773 Goldbach (DE)

(56) Entgegenhaltungen:
- EP-A- 0 321 403
- EP-A- 0 589 430
- FR-A- 2 372 452
- US-A- 3 949 021

## Beschreibung

EP 589'430 beschreibt Polyvinylalkohol (PVA)-Präpolymere, die typischerweise mit Isocyanatoethylmethacrylat (IEM) modifiziert sind. Kontaktlinsen werden daraus hergestellt, nämlich durch Copolymerisation dieser Präpolymere unter optionaler Verwendung weiterer hydrophiler und/oder hydrophober Comonomeren.

EP 321'403 beschreibt ebenfalls PVA-Präpolymere die mit einem vinylischen Liganden modifiziert sind. Diese werden ebenfalls copolymerisiert unter der optionalen Verwendung von hydrophilen z.B. N-Vinlypyrrolidon (NVP) und/oder hydrophoben Monomeren z.B. Vinylacetat.

Die vorliegende Erfindung beschreibt ein wasserlösliches vernetzbares Präpolymer, enthaltend in der Copolymerkette Einheiten, die von folgenden Monomerbausteinen abgeleitet sind; einem Vinyllactam (a), Vinylalkohol (b), gegebenenfalls einem Niederalkancarbonsäurevinylester (c), einem vinylischen Vernetzer (d) und gegebenenfalls einem vinylischen Photoinitiator (e); Verfahren zur Herstellung der neuen Präpolymere; vernetzte wasserunlösliche polymere Netzwerke daraus; Hydrogele und Formkörper aus den vernetzten wasserunlöslichen polymeren Netzwerken, insbesondere Kontaktlinsen; und Verfahren zur Herstellung von Hydrogelen und fertigen Kontaktlinsen unter Verwendung der genannten vernetzbaren wasserlöslichen Präpolymeren.

Vinyllactam-Copolymere wie z.B. Vinylpyrrolidon-Copolymere sind als Material für hochwasserhaltige Kontaklinsen schon länger bekannt. Stellvertretend sind hier z.B. Scafilcon A oder Surfilcon A genannt. Sie haben sich in der Praxis wegen ihres hohen Tragekomforts sehr gut bewährt.

US 4 347 198 beschreibt die Herstellung von Kontaktlinsen, wobei eine hydrophile Komponente, z.B. N-Vinylpyrrolidon, eine hydrophobe Komponente, z.B. Methylmethacrylat, ein Vernetzungsmittel und ein Initiator in einem Lösungsmittel, z.B. DMSO vermischt werden, und anschliessend das Ganze in einer Form vernetzt wird. Nach dem Extrahieren und Aequilibrieren in Wasser erhält man eine weiche Hydrogel-Kontaktlinse. Eine Extraktion mit Wasser ist deshalb notwendig, weil das Lösungsmittel und nicht umgesetzte Vinylmonomere entfernt werden müssen. Da ein Polymer z.B. in DMSO einerseits und Wasser andererseits unterschiedlich stark quillt, nimmt die Kontaktlinse erst beim Aequilibrieren ihre endgültige Grösse ein.

EP 216 074 beschreibt ein Verfahren zur Herstellung von Hydrogelkontaktlinsen. Es wird dort ein mit Methacrylat modifizierter Polyvinylalkohol verwendet, der in DMSO-Lösung mit Vinylmonomeren in einer geeigneten Giessform copolymerisiert wird, z.B. in Gegenwart eines Photoinitiators durch Bestrahlung mit UV-Licht für etwa 3 Stunden. Nach dem Entformen wird die Kontaktlinse mit Wasser bzw. physiologischer Kochsalzlösung extrahiert, um das DMSO und nicht umgesetzte Vinylmonomere zu entfernen. Auch hier erhält die Kontaktlinse wegen des unterschiedlichen Einflusses von DMSO und Wasser auf ihre Quellung die endgültige Geometrie zuletzt.

Es werden Anstrengungen von verschiedenen Seiten gemacht, um die Reaktionszeiten bei der Polymerherstellung zu verkürzen, um die Linsenfertigung rationeller zu gestalten. EP 370 827 (Vistakon) beschreibt z.B. die Verwendung von Borsäureestern bestimmter difunktioneller Alkohole als Lösungsmittel für die Polymerisation von, im wesentlichen, Hydroxyethylmethacrylat (HEMA) in einer Polystyrol-Giessform. Die Polymerisation erfolgt wiederum in Gegenwart eines Photoinitiators durch Bestrahlung mit UV-Licht in nur 6 - 12 Minuten, und liefert ein Gel, das anschliessend mit Wasser extrahiert werden muss.

Der eine Nachteil der bisherigen Verfahren zur Herstellung von Kontaktlinsen ist die langwierige Extraktion mit Wasser bzw. physiologischer Kochsalzlösung, die eine rationelle Kontaktlinsenherstellung mit kurzen Zykluszeiten ausschliesst.

Ein weiterer Nachteil der bisherigen Verfahren ist, wie bereits erwähnt, die relativ geringe Vernetzungsgeschwindigkeit bei der Herstellung von Polymeren beim Stand der Technik.

Die vorliegende Erfindung schafft hier Abhilfe. Es werden nämlich Präpolymere offenbart, die sowohl wasserlöslich als auch vernetzbar sind. Die oben erwähnte langwierige Extraktion mit Wasser bzw. physiologischer Kochsalzlösung nach einer Vernetzung entfällt bei der vorliegenden Erfindung, da beispielsweise in Wasser vernetzt werden kann. Dem Nachteil der relativ geringen Vernetzungsgeschwindigkeit wird dadurch begegnet, dass man nicht Monomere als Ausgangsmaterial zur Herstellung von Kontaktlinsen einsetzt, sondern vernetzbare Präpolymere.

Ein Gegenstand der vorliegenden Erfindung ist somit gerichtet auf ein wasserlösliches vernetzbares Präpolymer, enthaltend in der Copolymerkette Einheiten, die von folgenden Monomerbausteinen abgeleitet sind; einem Vinyllactam (a), Vinylalkohol (b), gegebenenfalls einem Niederalkancarbonsäurevinylester (c), einem vinylischen Vernetzer (d) und gegebenenfalls einem vinylischen Photoinitiator (e).

Unter einem wasserlöslichen vernetzbaren Präpolymer wird im Rahmen der vorliegenden Anmeldung ein vernetzbares und auch unvernetztes Präpolymer verstanden.

Ein bevorzugter Gegenstand der vorliegenden Erfindung ist ein wasserlösliches vernetzbares Präpolymer, enthaltend in der Copolymerkette Einheiten, die von folgenden Monomerbausteinen abgeleitet sind;
5 - 85 Gewichtsprozent eines Vinyllactams (a),
3 - 80 Gewichtsprozent Vinylalkohol (b),
0 - 65 Gewichtsprozent eines Niederalkancarbonsäurevinylesters (c),
3 - 40 Gewichtsprozent eines vinylischen Vernetzers (d) und
0 - 5 Gewichtsprozent eines vinylischen Photoinitiators (e).

Ein bevorzugter Gegenstand der vorliegenden Erfindung ist ferner ein wasserlösliches vernetzbares Präpolymer, enthaltend in der Copolymerkette Einheiten, die von folgenden Monomerbausteinen abgeleitet sind;
10 - 75 Gewichtsprozent eines Vinyllactams (a),
10 - 65 Gewichtsprozent Vinylalkohol (b),
2 - 40 Gewichtsprozent eines Niederalkancarbonsäurevinylesters (c),
5 - 35 Gewichtsprozent eines vinylischen Vernetzers (d) und
0 - 3 Gewichtsprozent eines vinylischen Photoinitiators (e).

Ein bevorzugter Gegenstand der vorliegenden Erfindung ist ein wasserlösliches vernetzbares Präpolymer, enthaltend in der Copolymerkette Einheiten, die von folgenden Monomerbausteinen abgeleitet sind;
20 - 70 Gewichtsprozent eines Vinyllactams (a),
15 - 60 Gewichtsprozent Vinylalkohol (b),
5 - 30 Gewichtsprozent eines Niederalkancarbonsäurevinylesters (c),
7 - 30 Gewichtsprozent eines vinylischen Vernetzers (d) und
0 - 2 Gewichtsprozent eines vinylischen Photoinitiators (e).

Unter einem Vinyllactam (a) wird erfindungsgemäss beispielsweise ein fünf bis siebengliedriges Lactam der Formel (I) verstanden, 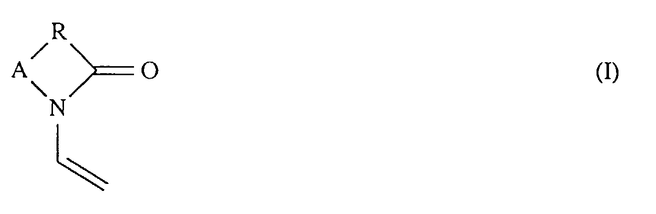 wobei R für lineares oder, gegebenenfalls mehrfach, verzweigtes Alkylen oder Alkenylen mit 2 bis 8 Kohlenstoffatomen steht, und A für CO oder CR¹R² steht, wobei R¹ Wasserstoff, Niederalkyl, Aryl, Aralkyl oder Alkaryl bedeutet, und R² für Wasserstoff oder Niederalkyl steht.

Einige N-Vinyllactame (a) entsprechend der vorstehenden Strukturformel (I) sind N-Vinyl-2-pyrrolidon, N-Vinyl-2-piperidon, N-Vinyl-2-caprolactam, N-Vinyl-3-methyl-2-pyrrolidon, N-Vinyl-3-methyl-2-piperidon, N-Vinyl-3-methyl-2-caprolactam, N-Vinyl-4-methyl-2-pyrrolidon, N-Vinyl-4-methyl-2-caprolactam, N-Vinyl-5-methyl-2-pyrrolidon, N-Vinyl-5-methyl-2-piperidon, N-Vinyl-5,5-dimethyl-2-pyrrolidon, N-Vinyl-3,3,5-trimethyl-2-pyrrolidon, N-Vinyl-5-methyl-5-ethyl-2-pyrrolidon, N-Vinyl-3,4,5-trimethyl-3-ethyl-2-pyrrolidon, N-Vinyl-6-methyl-2-piperidon, N-Vinyl-6-ethyl-2-piperidon, N-Vinyl-3,5-dimethyl-2-piperidon, N-Vinyl-4,4-dimethyl-2-piperidon, N-Vinyl-7-methyl-2-caprolactam, N-Vinyl-7-ethyl-2-caprolactam, N-Vinyl-3,5-dimethyl-2-caprolactam, N-Vinyl-4,6-dimethyl-2-caprolactam, N-Vinyl-3,5,7-trimethyl-2-caprolactam, N-Vinyl-maleinimid und N-Vinyl-succinimid. Falls gewünscht können auch Mischungen davon verwendet werden.

Ein bevorzugt verwendetes Vinyllactam (a) ist ein heterocyclisches Monomer der Formel I enthaltend 4 bis 6 Kohlenstoffatome im heterocyclischen Ring.

Ein bevorzugt verwendetes Vinyllactam (a) ist ein heterocyclisches Monomer der Formel I enthaltend 4 Kohlenstoffatome im heterocyclischen Ring.

Ein stärker bevorzugt verwendetes Vinyllactam (a) ist ein heterocyclisches Monomer der Formel I enthaltend 4 Kohlenstoffatome im heterocyclischen Ring, worin R¹ für Wasserstoff oder Niederalkyl steht.

Ein ebenfalls stärker bevorzugt verwendetes Vinyllactam (a) ist ein heterocyclisches Monomer der Formel I enthaltend 4 Kohlenstoffatome im heterocyclischen Ring, worin R¹ und R² unabhängig voneinander für Wasserstoff oder Niederalkyl stehen.

Ein stark bevorzugtes Vinyllactam (a) ist N-Vinyl-2-pyrrolidon.

Ein bevorzugter Gegenstand der vorliegenden Erfindung ist ein wasserlösliches vernetzbares Präpolymer, enthaltend in der Copolymerkette Einheiten, die von folgenden Monomerbausteinen abgeleitet sind; einem Vinyllactam (a), Vinylalkohol (b), gegebenenfalls einem Niederalkancarbonsäurevinylester (c), einem vinylischen Vernetzer (d) und gegebenenfalls einem vinylischen Photoinitiator (e); wobei der Gewichtsanteil (bezüglich Gesamtgewicht eines Präpolymers) eines Monomerbausteines (a) mindestens 11 Gew. % beträgt.

Unter Niederalkancarbonsäurevinylestern (c) werden beispielsweise Heptansäurevinylester, Hexansäurevinylester, Pentansäurevinylester, Butansäurevinylester, Propansäurevinylester (Vinylpropionat) oder Ethansäurevinylester (Vinylacetat) verstanden. Mischungen der genannten Vinylester (c) können ebenfalls verwendet werden. Bevorzugte Niederalkancarbonsäurevinylester (c) sind Vinylacetat, Vinylpropionat und Gemische der beiden.

Unter einem vinylischen Vernetzer (d) wird beispielsweise ein Derivat der Formel (II) verstanden,

R³-(CO)ₙ-(X¹-B-X¹-CO)ₘ-(X¹-B-X-CO)ₚ-O-CH=CH₂ (II)

worin R³ eine radikalisch polymerisierbare Kohlenwasserstoffgruppe bedeutet; n, m und p unabhängig voneinander null oder 1 sind; B unabhängig voneinander ein Diradikal mit bis zu 20 C-Atomen darstellt; X¹ unabhängig voneinander für -O-, -NH- oder eine Einfachbindung steht; und X für NH oder eine Einfachbindung steht.

Bei R³ handelt es sich beispielsweise um Alkenyl als radikalisch polymerisierbare Gruppe mit vorzugsweise 2 bis 12 C-Atomen. Beispiele für Alkenyl sind Vinyl, Allyl, 1-Propen-2-yl, 1-Buten-2- oder -3- oder -4-yl, 2-Buten-3-yl, die Isomeren von Pentenyl, Hexenyl, Octenyl, Decenyl und Dodecenyl. R³ enthält bevorzugt 2 bis 12, besonders bevorzugt 2 bis 8 und insbesondere bevorzugt 2 bis 4 C-Atome.

Das Diradikal B steht beispielsweise für Niederalkylen, Arylen, eine gesättigte bivalente cycloaliphatische Gruppe mit 6 bis 12 Kohlenstoffatomen, Alkylenarylen, Arylenalkylen oder Arylenalkylenarylen.

Ein bevorzugt verwendeter vinylischer Vernetzer (d) ist beispielsweise eine Verbindung der Formel (II), worin die polymerisierbare Gruppe R³ für Alkenyl mit 2 bis 8 C-Atomen steht; n, m und p unabhängig voneinander null oder 1 sind; B unabhängig voneinander für Niederalkylen, Arylen, eine gesättigte bivalente cycloaliphatische Gruppe mit 6 bis 12 Kohlenstoffatomen, Alkylenarylen, Arylenalkylen oder Arylenalkylenarylen steht; X¹ unabhängig voneinander für -O-, -NH- oder eine Einfachbindung steht; und X für NH oder eine Einfachbindung steht.

Ein bevorzugt verwendeter vinylischer Vernetzer (d) ist beispielsweise eine Verbindung der Formel (II), worin die polymerisierbare Gruppe R³ für Alkenyl mit 2 bis 8 C-Atomen steht; n, m und p unabhängig voneinander null oder 1 sind; B unabhängig voneinander für Niederalkylen, Arylen, eine gesättigte bivalente cycloaliphatische Gruppe mit 6 bis 12 Kohlenstoffatomen, Alkylenarylen oder Arylenalkylen steht; X¹ unabhängig voneinander für -O-, -NH- oder eine Einfachbindung steht; und X für NH oder eine Einfachbindung steht.

Ein bevorzugt verwendeter vinylischer Vernetzer (d) ist beispielsweise eine Verbindung der Formel (II), worin die polymerisierbare Gruppe R³ für Alkenyl mit 2 bis 8 C-Atomen steht; n, m und p unabhängig voneinander null oder 1 sind; B unabhängig voneinander für Niederalkylen, Arylen oder eine gesättigte bivalente cycloaliphatische Gruppe mit 6 bis 12 Kohlenstoffatomen steht; X¹ unabhängig voneinander für -O-, -NH- oder eine Einfachbindung steht; und X für NH oder eine Einfachbindung steht.

Ein bevorzugt verwendeter vinylischer Vernetzer (d) ist ferner eine Verbindung der Formel (II), worin die polymerisierbare Gruppe R³ für Alkenyl mit 2 bis 8 C-Atomen steht; n = 1 oder 0 ist und m und p null sind.

Ein insbesondere bevorzugt verwendeter vinylischer Vernetzer (d) ist beispielsweise eine Verbindung der Formel (II), worin die polymerisierbare Gruppe R³ für Alkenyl mit 2 bis 4 C-Atomen steht; m und n eins sind und p = 1 oder 0 ist; B unabhängig voneinander für Niederalkylen, Arylen oder eine gesättigte bivalente cycloaliphatische Gruppe mit 6 bis 12 Kohlenstoffatomen steht; X¹ unabhängig voneinander für -O-, -NH- oder eine Einfachbindung steht; und X NH oder eine Einfachbindung bedeutet.

Ein stark bevorzugt verwendeter vinylischer Vernetzer (d) ist beispielsweise eine Verbindung der Formel (II), worin die polymerisierbare Gruppe R³ für Alkenyl mit 2 bis 4 C-Atomen steht; m und n eins sind und p = 1 oder 0 ist; B unabhängig voneinander für ein Niederalkylen steht; X¹ unabhängig voneinander für -O-, -NH- oder eine Einfachbindung steht; und X NH oder eine Einfachbindung bedeutet.

Unter einem vinylischen Photoinitiator (e) wird beispielsweise ein Derivat der Formel (III) verstanden,

CH₂=CH-OCOX-B-XCOY-PI (III)

wobei X unabhängig voneinander für NH oder eine Einfachbindung steht; Y für -O-, -S- oder -NH- steht; B ein Diradikal mit bis zu 20 C-Atomen darstellt; und PI für einen um YH verminderten Rest eines Photoinitiators steht.

Ein bevorzugt verwendeter vinylischer Photoinitiator (e) ist beispielsweise eine Verbindung der Formel (III), worin X unabhängig voneinander für NH oder eine Einfachbindung steht; Y für -O- oder -NH- steht; B ein Diradikal darstellt und beispielsweise für Niederalkylen, Arylen, eine gesättigte bivalente cycloaliphatische Gruppe mit 6 bis 12 Kohlenstoffatomen, Alkylenarylen, Arylenalkylen oder Arylenalkylenarylen steht; und PI den um YH verminderten Rest eines Photoinitiators gemäss der Formel (IV) bedeutet.

Ein bevorzugt verwendeter vinylischer Photoinitiator (e) ist beispielsweise eine Verbindung der Formel (III), worin X unabhängig voneinander für NH oder eine Einfachbindung steht; Y für -O- steht; B ein Diradikal darstellt und beispielsweise für Niederalkylen, Arylen, eine gesättigte bivalente cycloaliphatische Gruppe mit 6 bis 12 Kohlenstoffatomen, Alkylenarylen, Arylenalkylen oder Arylenalkylenarylen steht; und PI den um YH verminderten Rest eines Photoinitiators gemäss der Formel (IV) bedeutet.

Ein bevorzugt verwendeter vinylischer Photoinitiator (e) ist ferner eine Verbindung der Formel (III), worin X unabhängig voneinander für NH oder eine Einfachbindung steht; Y für -O- oder -NH- steht; B ein Diradikal darstellt und beispielsweise für Niederalkylen, Arylen oder eine gesättigte bivalente cycloaliphatische Gruppe mit 6 bis 12 Kohlenstoffatomen steht; und PI den um YH verminderten Rest eines Photoinitiators gemäss der Formel (IV) bedeutet.

Unter einem Photoinitiator PI-YH wird beispielsweise eine Verbindung der Formel (IV) verstanden, 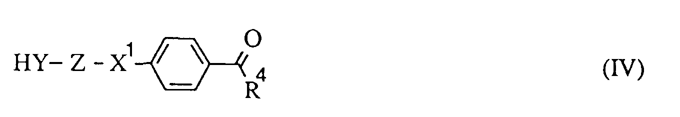 worin Y für -O-, -S- oder -NH- steht; X¹ -O-, -NH- oder eine Einfachbindung bedeutet; Z für Niederalkylen, Arylen, eine gesättigte bivalente cycloaliphatische Gruppe mit 6 bis 12 Kohlenstoffatomen, Alkylenarylen, Arylenalkylen oder Arylenalkylenarylen steht; und R⁴ für einen Rest der Formel (V) steht, 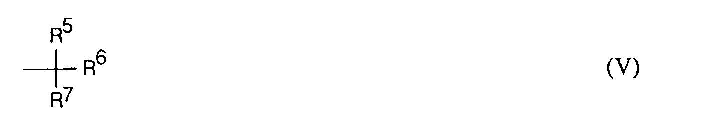 worin R⁵ für Niederalkyl oder Niederalkoxy steht; R⁶ ausgewählt ist unter Niederalkyl, Niederalkoxy und Aralkyl; und R⁷ für Hydroxy, Diniederalkylamino, Aryl oder Azacyclooxaalkyl steht.

Bevorzugte Beispiele für Reste R⁴ gemäss der Formel (V) sind 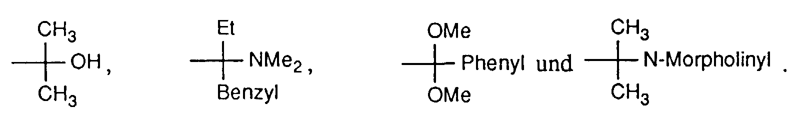 Stark bevorzugt ist ferner ein vinylischer Photoinitiator (e), worin X unabhängig voneinander für NH oder eine Einfachbindung steht; Y für -O- steht; B ein Diradikal darstellt und beispielsweise für Niederalkylen, Arylen oder eine gesättigte bivalente cycloaliphatische Gruppe mit 6 bis 12 Kohlenstoffatomen steht; und PI für den um die primäre Hydroxygruppe verminderten Rest von Irgacure®2959 steht.

Der Begriff "nieder" bedeutet im Rahmen dieser Erfindung im Zusammenhang mit Resten und Verbindungen, soweit er nicht abweichend definiert ist, insbesondere Reste oder Verbindungen mit bis zu 7 Kohlenstoffatomen, vorzugsweise mit bis zu 4 Kohlenstoffatomen.

Niederalkyl kann geradkettig oder verzweigt sein und weist insbesondere bis zu 7 Kohlenstoffatome auf, vorzugsweise bis zu 4 Kohlenstoffatome, und ist z.B. Methyl, Ethyl, Propyl, iso-Propyl, n-Butyl, iso-Butyl oder tert.-Butyl.

Sinngemäss wird unter einer Niederalkancarbonsäure eine geradkettige oder verzweigte aliphatische Carbonsäure mit bis zu 7 Kohlenstoffatomen und vorzugsweise mit bis zu 4 Kohlenstoffatomen verstanden. Beispiele sind Essigsäure, Propionsäure und Buttersäure.

Alkylen weist bis zu 10 Kohlenstoffatome auf und kann geradkettig oder verzweigt sein. Geeignete Beispiele umfassen Decylen, Octylen, Hexylen, Pentylen, Butylen, Propylen, Ethylen, Methylen, 2-Propylen, 2-Butylen oder 3-Pentylen. Alkylen ist vorzugsweise Niederalkylen.

Niederalkylen bedeutet Alkylen mit bis zu 7 und besonders bevorzugt mit bis zu 4 Kohlenstoffatomen. Eine besonders bevorzugte Bedeutung von Niederalkylen ist Methylen oder Ethylen.

Alkenylen weist bis zu 10 Kohlenstoffatome auf und kann geradkettig oder verzweigt sein. Geeignete Beispiele umfassen Decenylen, Octenylen, Hexenylen, Butenylen, Ethenylen. Alkenylen ist vorzugsweise Niederalkenylen.

Niederalkenylen bedeutet Alkenylen mit bis zu 7 und besonders bevorzugt mit bis zu 4 Kohlenstoffatomen. Eine besonders bevorzugte Bedeutung von Niederalkenylen ist Ethenylen.

Aryl ist z.B. Naphthyl, Pyridyl, Thienyl oder bevorzugt unsubstituiertes oder durch Niederalkyl oder Niederalkoxy substituiertes Phenyl.

Niederalkoxy weist insbesondere bis zu 7 Kohlenstoffatome auf, vorzugsweise bis zu 4 Kohlenstoffatome, und ist z.B. Methoxy, Ethoxy, Propoxy oder tert.-Butoxy.

Aralkyl ist vorzugsweise Phenylniederalkyl mit bis zu 4 Kohlenstoffatomen in der Alkyleinheit, z.B. 1- oder 2-Phenylethyl oder Benzyl.

Alkaryl ist bevorzugt Niederalkylphenyl mit bis zu 4 Kohlenstoffatomen in einer Alkyleinheit, z.B. Ethylphenyl, Toluyl oder Xylyl.

Arylen ist vorzugsweise Phenylen, das unsubstituiert oder durch Niederalkyl oder Niederalkoxy substituiert ist, insbesondere 1,3-Phenylen oder 1,4-Phenylen oder Methyl-1,4-phenylen.

Eine gesättigte bivalente cycloaliphatische Gruppe ist vorzugsweise Cyclohexylen oder Cyclohexylen-niederalkylen, z.B. Cyclohexylenmethylen, die unsubstituiert ist oder substituiert durch eine oder mehrere Niederalkylgruppen, z.B. Methylgruppen, wie beispielsweise Trimethylcyclohexylenmethylen, z.B. der bivalente Isophoronrest.

Cycloalkyl weist insbesondere bis zu 7 Kohlenstoffatome auf, vorzugsweise 3 bis 6 Kohlenstoffatome, und ist z.B. Cyclopropyl, Cyclobutyl, Cyclopentyl oder Cyclohexyl.

Unter einem Azacyclooxaalkyl wird ein sauerstoffhaltiger gesättigter Azacycloalkylrest verstanden, wobei der Sauerstoff im Ring eingebaut ist, und Azacycloalkyl für einen stickstoffhaltigen Cycloalkylrest steht. Ein typisches Beispiel für ein Azacyclooxaalkan ist Morpholin.

Ein weiterer Gegenstand der vorliegenden Erfindung ist ein Verfahren zur Herstellung eines erfindungsgemässen Präpolymers, das dadurch gekennzeichnet ist, dass mit Vorteil schon von einem geeigneten Ausgangspolymer ausgegangen wird. Ein geeignetes Ausgangspolymer ist beispielsweise das Polymersationsprodukt aus einem N-Vinyllactam (a) und einem Niederalkancarbonsäurevinylester (c). Beispiele für solche Ausgangspolymere sind N-Vinylpyrrolidon-Vinylacetat, N-Vinylpyrrolidon-Vinylpropionat oder gemischte Ester, nämlich N-Vinylpyrrolidon-Vinylacetat/Vinylpropionat.

Die letztgenannten Ausgangspolymere sind kommerziell erhältlich mit verschiedenen durchschnittlichen Molekulargewichten und in unterschiedlichen Zusammensetzungen.

Aldrich vermarktet beispielsweise N-Vinylpyrrolidon-Vinylacetat (VP-VAc) Polymer als sogenanntes 60/40 Copolymer (60 Gew. % VP, 40 Gew. % VAc), das ein Pulver ist und ein Molekulargewicht von Mₙ = 56 000 aufweist. Aldrich bietet weiterhin VP-VAc 30/70 in iso-Propanol an.

Die Molekulargewichte (Mₙ) werden mittels Gelpermeations-Chromatographie (GPC) {Size Exclusion Chromatography (SEC)} unter Verwendung von DMF als Lösungsmittel bestimmt, und beziehen sich wenn nicht anders vermerkt auf den Eichstandard von Polymethylmethacrylat (PMMA).

Ein weiterer Anbieter von VP-VAc Ausgangspolymeren ist BASF. BASF verkauft diese Polymere unter der Bezeichnung Luviskol VA. Beispiele sind Luviskol VA 28, Luviskol VA 37 oder Luviskol VA 73 mit einem Molekulargewicht von Mₙ = 7000 - 22000 (PMMA). Luviskol VA 37 HM ist ein hochmolekulares Ausgangspolymer mit einem Mₙ = 32000 (PMMA). Die numerische Codierung der genannten Luviskole deutet auf die Zusammensetzung hin. So bedeutet beispielsweise Luviskol VA 28, dass es sich um ein VP-VAc Ausgangspolymer mit etwa 20 Gew. % VP und etwa 80 Gew. % VAc handelt.

Die N-Vinyllactam (a)-Niederalkancarbonsäurevinylester (c)-Ausgangspolymere können sauer oder alkalisch partiell oder vollständig hydrolysiert werden. Eine partielle Hydrolyse führt zu Terpräpolymeren, enthaltend die Bausteine Vinyllactam (a), Vinylalkohol (VA) (b) und Niederalkancarbonsäurevinylester (c). Eine komplette Hydrolyse führt zu einem Ausgangspolymer enthaltend die Bausteine Vinyllactam (a) und Vinylalkohol (VA) (b). Dergestalt hydrolysierte Ausgangspolymere können nun auf geeignete Art derivatisiert werden, beispielsweise mit Methacrylsäurechlorid, mit einem 1:1 Additionsprodukt aus Toluoldiisocyanat (TDI) mit HEMA, mit einem 1:1 Additionsprodukt aus Isophorondiisocyanat (IPDI) mit HEMA oder mit Isocyanatoethylmethacrylat (IEM). Durch eine Derivatisierung kann die Art und die Menge, beispielsweise der Vernetzerkomponente (d), bestimmt und im erfindungsgemässen Präpolymer eingebaut werden.

Auf analoge Weise kann ein N-Vinyllactam (a)-Vinylalkohol (b) - Ausgangspolymer beispielsweise auch mit einem geeigneten Vorläufer eines vinylischen Photoinitiators (e) derivatisiert werden. Ein solcher Vorläufer ist beispielsweise abgeleitet von der vorstehenden Formel (III), wobei man beispielsweise durch die formale Subtraktion von Vinylalkohol in der Formel (III) einen solchen Vorläufer formulieren kann. Die Derivatisierung des Ausgangspolymers zu einem Präpolymer enthaltend eine Photoinitiatorkomponente (e), kann gleichzeitig mit dem Einbau einer Vernetzerkomponente (d) oder nacheinander geschehen.

Die Molmasse eines Präpolymers wird in erster Linie durch die geeignete Wahl des Ausgangspolymers z.B. eines käuflichen N-Vinylpyrrolidon-Vinylacetat-Präpolymers bestimmt. Die vorstehend beschriebene Derivatisierung verändert die Molmasse vergleichsweise nur marginal und kann zudem durch die Wahl z.B. der Vernetzerkomponente und den Hydrolysegrad des Ausgangspolymers genau gesteuert werden. Die Molekulargewichte (Mₙ) von solchen erfindungsgemässen Präpolymeren bewegen sich im Regelfall im Bereich von Mₙ = 2 000 - 200 000 g/mol. Bevorzugt liegt das Molekulargewicht im Bereich von 5 000 - 200 000 g/mol und stark bevorzugt im Bereich von 10 000 - 100 000 g/mol.

Die Herstellung eines erfindungsgemässen Präpolymers kann in An- oder Abwesenheit eines Lösungsmittels durchgeführt werden. Als Lösungsmittel sind grundsätzlich all diejenigen Lösungsmittel geeignet, die sowohl ein Ausgangspolymer wie auch ein herzustellendes Präpolymer lösen und dazu weitgehend inert sind. Beispiele hierfür sind Wasser, Alkohole wie Niederalkanole, z.B. Ethanol oder Methanol, ferner Carbonsäureamide, wie Dimethylformamid (DMF) oder Dimethylacetamid (DMA), Ether wie z.B. Diethylether, Tetrahydrofuran (THF) oder Diethylenglykoldimethylether (Diglyme), ferner Dimethylsulfoxid, ebenso Gemische von geeigneten Lösungsmitteln, wie z.B. Gemische von einem Alkohol mit einem Ether, wie z.B. Ethanol / THF, oder Methanol / Diethylether. Bevorzugt verwendet werden Niederalkanole, Carbonsäureamide oder Dimethylsulfoxid.

Bei der Herstellung eines erfindungsgemässen Präpolymers, namentlich während und nach dem Einbau der Vemetzerkomponente (d) und speziell der Photoinitiatorkomponente (e) sollte unter Ausschluss von Licht gearbeitet werden, um eine unkontrollierte und vorzeitige Vernetzung zu vermeiden. Zusätzlich ist es vorteilhaft, wenn während der Synthese eines erfindungsgemässen Präpolymers Luftsauerstoff nicht ausgeschlossen oder gegebenenfalls beigemischt wird, da der Sauerstoff bei der Synthese als Radikalfänger wirkt. Eventuell vorhandene freie Radikale werden abgefangen, womit eine unkontrollierte Vernetzung unterdrückt wird. Der Sauerstoff wirkt also stabilisierend.

Die Zusammensetzung eines erfindungsgemässen Präpolymers entscheidet, nachdem es vernetzt ist, über die Eigenschaften eines resultierenden Formkörpers, wie beispielsweise einer Hydrogelkontaktlinse. Vernetzerkomponente (d) in einem Präpolymer kann dabei vornehmlich dazu dienen, die mechanischen Eigenschaften einer Kontaktlinse zu steuern. Der Wassergehalt beispielsweise einer Hydrogelkontaktlinse wird z.B. durch den Gehalt an Vinyllactam (a) oder Vinylalkohol (b) im Präpolymer bestimmt.

Ein erfindungsgemässes Präpolymer kann nach der Herstellung mit den üblichen Methoden gereinigt werden, z.B. durch Umfällen, Filtration, Entfernen von Restmonomeren im Vakuum, eventuell bei erhöhter Temperatur. Ein eventuell verwendetes Lösungsmittel kann am Rotationsverdampfer oder durch Giessen und Trocknen eines Films an Luft oder im Vakuum entfernt werden. Eine besonders elegante Methode ist die Reinigung durch Ultrafiltration zur Entfernung niedermolekularer Anteile und damit auch zum einfachen Einstellen der gewünschten Konzentration der wässrigen Präpolymer-Lösung.

Ein weiterer Gegenstand der vorliegenden Erfindung besteht darin, Hydrogel-Kontaktlinsen mit gewünschter Geometrie und gewünschtem Wassergehalt herzustellen, die aus wässriger Lösung innerhalb Sekunden erhältlich sind, umfassend die Schritte, dass ein unvernetztes Präpolymer in Wasser gelöst und dann auf geeignete Art, z.B. in einer Form, vernetzt wird. Die offensichtlichen Vorteile sind:
Restmonomere werden im Regelfall bereits auf der Stufe des unvernetzten Präpolymers entfernt;
der Umsatz bei der Vernetzung ist wesentlich kleiner, da das polymere Netzwerk aus Präpolymeren und nicht aus Monomeren aufgebaut wird;
die Reaktionszeiten sind sehr kurz; in der Regel nicht länger als eine Minute und typischerweise kürzer als 20 Sekunden; und
eine zeitintensive Extraktion der Kontaklinse mit Wasser ist nicht mehr zwingend, da bereits in Wasser vernetzt werden kann.

Für die Vernetzung eines erfindungsgemässen Präpolymers wird daher vorteilhafterweise eine wässrige Lösung hergestellt. Wurde bei der Synthese eines Präpolymers ein Lösungsmittel verwendet, kann dieses zuerst vollständig oder aber erst nach Zugabe einer entsprechenden Wassermenge entfernt werden. Die Konzentration einer Präpolymer-Lösung wird vorzugsweise so eingestellt, dass der Wassergehalt der Lösung dem einer fertigen Kontaktlinse möglichst nahe kommt. In einem bevorzugten Herstellungsverfahren entspricht der Wassergehalt einer wässrigen Präpolymer-Lösung genau dem Wassergehalt (in Gew. %) eines vernetzten Präpolymers, also eines Hydrogels.

Die Vernetzung eines Präpolymers zum Hydrogel erfolgt im Regelfall unabhängig von seiner Synthese und kann auf unterschiedliche Arten ausgeführt werden.

Eine erste Methode besteht darin, ein erfindungsgemässes Präpolymer einer geeigneten energiereichen Strahlung auszusetzen, z.B. Elektronen- oder Gammastrahlen, aktinischer oder UV-Strahlung geeigneter Wellenlänge, die Radikale im Präpolymer erzeugen. Diese Radikale enthaltenden Präpolymere können zu polymeren Netzwerken abreagieren. Bei dieser Vernetzungsmethode werden keine speziellen Anforderungen an die Natur eines unvernetzten erfindungsgemässen Präpolymers gesetzt, das heisst es muss z.B. kein vinylischer Vernetzer (d) vorhanden sein.

Bei der Photovernetzung wird falls erforderlich ein geeigneter Photoinitiator zugesetzt, der eine radikalische Vernetzung initiieren kann. Beispiele hierfür sind dem Fachmann geläufig. Stellvertretend können genannt werden: Benzoinmethylether, 1-Hydroxycyclohexylphenylketon, Darocur und Irgacure-Typen, bevorzugt Darocur 1173® und Irgacure 2959®. Die Vernetzung kann dann durch UV-Licht geeigneter Wellenlänge ausgelöst werden.

Eine bevorzugte Vernetzung ist gerichtet auf die Photovernetzung von Präpolymeren, die eine vinylische Photoinitiatorkomponente (e) enthalten. Ein solches Präpolymer ist speziell geeignet, direkt, ohne die Zugabe eines zusätzlichen Photoinitiators, vernetzt zu werden.

Eine Vernetzung wird geeigneterweise in einem Lösungsmittel durchgeführt. Als Lösungsmittel sind grundsätzlich alle Lösungsmittel geeignet, die die verwendeten Präpolymere lösen, z.B. Wasser, Alkohole wie Niederalkanole, z.B. Ethanol oder Methanol, ferner Carbonsäureamide, wie Dimethylformamid, oder Dimethylsulfoxid, ebenso Gemische von geeigneten Lösungsmitteln, wie z.B. Gemische von Wasser mit einem Alkohol, wie z.B. ein Wasser/ Ethanol- oder ein Wasser/ Methanol-Gemisch. Geeignet sind ferner wässrige Lösungen, enthaltend Alkali- oder Erdalkalihalogenide, wie zum Beispiel NaCl oder CaCl₂. Bevorzugt verwendet wird beispielsweise eine physiologische Kochsalzlösung, enthaltend etwa 0.9 Gew.% NaCl.

Die Vernetzung erfolgt vorzugsweise unmittelbar aus einer wässrigen Lösung eines erfindungsgemässen Präpolymers heraus. Eine solche wässrige Lösung kann auch direkt als Resultat eines bevorzugten Reinigungsschrittes, z.B. einer Ultrafiltration, erhalten werden kann. Beispielsweise kann eine Vernetzung, bevorzugt eine Photovernetzung, einer etwa 10 bis 50 Gew. prozentigen wässrigen Lösung vorgenommen werden.

Ein weiterer Gegenstand der vorliegenden Erfindung ist ein polymeres Netzwerk, dadurch gekennzeichnet, dass es im wesentlichen besteht aus einem gemäss Hauptanspruch offenbarten Präpolymer in vernetzter Form.

Ein weiterer Gegenstand der vorliegenden Erfindung ist ein Hydrogel, das dadurch gekennzeichnet ist, dass es im wesentlichen besteht aus einem gemäss Hauptanspruch offenbarten Präpolymer in vernetzter Form.

Ein bevorzugter Gegenstand ist ein Hydrogel, im wesentlichen bestehend aus einem Präpolymer gemäss der Definition im Hauptanspruch in vernetzter Form, wobei es sich um eine Kontaktlinse handelt.

Ein weiterer bevorzugter Gegenstand ist eine Kontaktlinse, bestehend im wesentlichen aus einem gemäss Hauptanspruch offenbarten Präpolymer in vernetztem Zustand.

Ein weiterer Gegenstand der vorliegenden Erfindung ist eine Kontaktlinse erhältlich durch Vernetzen eines gemäss Hauptanspruch offenbarten Präpolymers.

Ein weiterer Gegenstand der vorliegenden Erfindung ist ein Formkörper, bestehend im wesentlichen aus einem Präpolymer gemäss der Definition im Hauptanspruch in vernetztem Zustand.

Beispiele für erfindungsgemässe Formkörper sind neben Kontaktlinsen, biomedizinische Artikel oder speziell ophthalmische Formkörper, z.B. künstliche Hornhaut, Intraokularlinsen, Augenverbände, Formkörper, die in der Chirurgie Verwendung finden können, wie Herzklappen, künstliche Arterien oder dergleichen, ferner Fasern, Filme oder Membranen, z.B. Membranen für Diffusionskontrolle, photostrukturierbare Folien für Informationsspeicherung, oder Photoresistmaterialien, z.B. Membranen oder Formkörper für Aetzresist oder Siebdruckresist.

Die nachfolgend aufgeführten Beispiele dienen der weiteren Illustration der vorliegenden Erfindung; sie sollen diese jedoch in ihrem Umfang in keiner Weise einschränken. Temperaturen sind in Grad Celsius angegeben.

### Beispiel 1

Allgemeine Vorgehensweise bei der sauren Hydrolyse von VP-VAc-Präpolymeren.

Luviskol VA (BASF) oder VP-VAc-Copolymer (Aldrich) mit einem VP-Gewichtsanteil zwischen 18 und 70 Prozent wird als 10 gewichtsprozentige Lösung in Methanol oder in Methanol/Wasser (10 - 90 % Wasser) vorgelegt. Hierzu wird eine dem VAc Anteil entsprechende äquimolare Menge Säure zugegeben, nämlich konz. Schwefelsäure (95 %), konz. Salzsäure (37 %) oder stark saurer Ionenaustauscher, und man erhitzt dann auf Rückflusstemperatur. Durch periodische Probenentnahme und Titration mit 0.1 N KOH-Lösung (z.B. Titrator DL 40 der Firma Mettler) wird der Reaktionsverlauf kontrolliert (Bestimmung der Konzentration der gebildeten Essigsäure). Die Hydrolyse wird dann abgebrochen, wenn entweder der gewünschte Hydrolysegrad erreicht, oder die Hydrolyse komplett ist (Konzentration der Essigsäure erreicht einen konstanten Wert). Für vollständige Hydrolysen werden 1 - 2 Tage Reaktionszeit benötigt. Eine vollständige Hydrolyse bedeutet nicht notwendigerweise, dass alle hydrolysierbaren Estergruppen gespalten sind, sondern vielmehr, dass die Hydrolyse zum Stillstand gekommen ist. Die nachfolgenden Beispiele zeigen eindrücklich, dass der Hydrolysierungsgrad stark abhängig ist von den Reaktionsbedingungen. Die methanolische Reaktionslösung wird anschliessend zur Entfernung der Essigsäure über eine Säule mit neutral gewaschenem, basischem Ionenaustauscher (Merck; 1.2 molar zur eingesetzten Säure) gegeben und am Rotationsverdampfer eingeengt. Die eingeengte Lösung wird als Folie ausgegossen, einige Tage an der Luft und dann bei 40° C und 0.1 mbar (10 Pa) bis zur Gewichtskonstanz getrocknet. Alternativ kann die eingeengte Lösung mit Wasser verdünnt, und am Rotationsverdampfer vom restlichen Alkohol befreit werden; dann wird die verbleibende wässrige Lösung sprühgetrocknet. Die so erhaltenen Präpolymere sind gut löslich in Wasser, Alkoholen (Niederalkanolen), Dimethylformamid (DMF), N,N-Dimethylacetamid (DMA) und Dimethylsulfoxid (DMSO).

### Beispiel 2

50 g eines VP-VAc-Copolymers 60/40 (Aldrich), enthaltend 61 Gew. % VP und 39 Gew. % VAc, werden in 450 g Methanol gelöst und mit 12 g 95 Gew.% Schwefelsäure unter kräftigem Rühren versetzt. Dieses Gemisch wird 2 Tage unter Rückfluss erwärmt (Badtemperatur 80°). Die Reaktionslösung wird auf Raumtemperatur (RT) gekühlt und dann über eine Säule eluiert, enthaltend 190 g stark basischen Ionenaustauscher. Die methanolische Lösung wird dann auf ca. 100 ml Volumen eingedampft, als Folie ausgegossen, einige Tage an der Luft und dann bei 40° C und 0.1 mbar (10 Pa) bis zur Gewichtskonstanz getrocknet. Es verbleibt ein Festkörper, 20.3 g (Ausbeute 62 Gew. %), dessen OH-Gehalt 4.83 mmol/g Präpolymer beträgt. Der Hydrolysegrad von VAc beträgt ca. 90 %.

### Beispiel 3

120 g Luviskol VA 37 (BASF) (50.4 Gew. % in Ethanol), enthaltend 28 Gew. % VP und 72 Gew. % VAc, werden mit 480 g Methanol verdünnt und dann unter Rühren mit 48 g 37 Gew. % Salzsäure versetzt. Dieses Gemisch wird 1 Tag unter Rückfluss erwärmt (Badtemperatur 80°). Die Reaktionslösung wird auf Raumtemperatur (RT) gekühlt und dann über eine Säule eluiert, enthaltend 360 g stark basischen Ionenaustauscher. Die methanolische Lösung wird dann auf ca. 100 ml Volumen eingedampft, als Folie ausgegossen, einige Tage an der Luft und dann bei 40° C und 0.1 mbar (10 Pa) bis zur Gewichtskonstanz getrocknet. Es verbleibt ein Festkörper, dessen OH-Gehalt 7.12 mmol/g Präpolymer beträgt. Der Hydrolysegrad von VAc beträgt ca. 66.5 %.

### Beispiel 4

Allgemeine Vorgehensweise bei der alkalischen Hydrolyse von VP-VAc-Präpolymeren.

Luviskol VA (BASF) oder VP-VAc-Copolymer (Aldrich) mit einem VP-Gewichtsanteil zwischen 18 und 70 Prozent wird als 10 gewichtsprozentige Lösung in Methanol oder in Methanol/Wasser (10 - 90 % Wasser) vorgelegt. Hierzu wird eine dem VAc Anteil entsprechende äquimolare Menge an Lauge zugegeben, nämlich Natriumhydroxid oder Kaliumhydroxid oder stark basischer Ionenaustauscher, und man erhitzt dann auf Rückflusstemperatur. Durch periodische Probenentnahme und Titration mit 0.1 N HCl-Lösung (z.B. Titrator DL 40 der Firma Mettler) wird der Reaktionsverlauf kontrolliert (Bestimmung der Konzentration des gebildeten Natriumacetats). Die Hydrolyse wird dann abgebrochen, wenn entweder der gewünschte Hydrolysegrad erreicht, oder die Hydrolyse komplett ist (Konzentration des Natriumacetats erreicht einen konstanten Wert). Für vollständige Hydrolysen werden 1 - 2 Tage Reaktionszeit benötigt. Eine vollständige Hydrolyse bedeutet nicht notwendigerweise, dass alle hydrolysierbaren Estergruppen gespalten sind, sondern vielmehr, dass die Hydrolyse zum Stillstand gekommen ist. Die nachfolgenden Beispiele zeigen wiederum, dass der Hydrolysegrad stark abhängig ist von den Reaktionsbedingungen. Die methanolische Reaktionslösung wird anschliessend zur Entfernung der Base über eine Säule mit neutral gewaschenem, sauren Ionenaustauscher (Merck; 1.2 molar zur eingesetzten Base) gegeben und danach zur endgültigen Entfernung des Natriumacetats über eine Säule mit basischem Ionenaustauscher gegeben. Dann wird am Rotationsverdampfer eingeengt. Die eingeengte Lösung wird als Folie ausgegossen, einige Tage an der Luft und dann bei 40° C und 0.1 mbar (10 Pa) bis zur Gewichtskonstanz getrocknet. Alternativ kann die eingeengte Lösung mit Wasser verdünnt, und am Rotationsverdampfer vom restlichen Alkohol befreit werden; dann wird die verbleibende wässrige Lösung sprühgetrocknet. Man erhält ein pulverförmiges Endprodukt. Die so erhaltenen Präpolymere sind gut löslich in Wasser, Alkoholen (Niederalkanolen), Dimethylformamid (DMF), N,N-Dimethylacetamid (DMA) und Dimethylsulfoxid (DMSO).

### Beispiel 5

50 g eines VP-VAc-Copolymers 60/40 (Aldrich), enthaltend 61 Gew. % VP und 39 Gew. % VAc, werden in 450 g Methanol gelöst und mit 9.3 g Natriumhydroxid unter kräftigem Rühren versetzt. Dieses Gemisch wird 30 Stunden unter Rückfluss erwärmt (Badtemperatur 80°). Die Reaktionslösung wird auf Raumtemperatur (RT) gekühlt und dann nacheinander über eine stark saure Säule (120 g Ionenaustauscher) und eine stark basische Säule (155 g Ionenaustauscher) eluiert. Die methanolische Lösung wird dann auf ca. 80 ml Volumen eingedampft, als Folie ausgegossen, einige Tage an der Luft und dann bei 40° C und 0.1 mbar (10 Pa) bis zur Gewichtskonstanz getrocknet. Es verbleibt ein Festkörper, 22.4 g (Ausbeute 56 Gew. %), dessen OH-Gehalt 5.18 mmol/g Präpolymer beträgt. Der Hydrolysegrad von VAc beträgt ca. 95 %.

### Beispiel 6

92 g Luviskol VA 55 (BASF) (54.4 Gew. % in Ethanol), enthaltend 45 Gew. % VP und 55 Gew. % VAc, werden mit 408 g Methanol verdünnt und dann unter Rühren mit 11.6 g Natriumhydroxid versetzt. Dieses Gemisch wird 1 Tag unter Rückfluss erwärmt (Badtemperatur 80°). Die Reaktionslösung wird auf Raumtemperatur (RT) gekühlt und dann nacheinander über eine stark basische Säule (150 g Ionenaustauscher) und eine stark saure Säule (200 g Ionenaustauscher) eluiert. Die methanolische Lösung wird dann auf ca. 100 ml Volumen eingedampft, als Folie ausgegossen, einige Tage an der Luft und dann bei 40° C und 0.1 mbar (10 Pa) bis zur Gewichtskonstanz getrocknet. Es verbleibt ein Festkörper, 30 g (Ausbeute 72 Gew. %), dessen OH-Gehalt 4.91 mmol/g Präpolymer beträgt. Der Hydrolysegrad von VAc beträgt ca. 70 %.

### Beispiel 7

10 g eines gemäss Beispiel 1 oder 3 hergestellten Terpolymers, enthaltend 74 Gew. % VP, 4 Gew. % VAc und 21 Gew. % VA, werden in 90 g wasserfreiem DMSO gelöst. Hierzu werden unter Rühren bei RT 2 g IEM gegeben, und dann für 21 Stunden auf 40° C erwärmt. Eine IR-spektroskopische Messung zeigt nach der genannten Reaktionszeit keine NCO-Bande bei 2270 cm⁻¹. Die Reaktionslösung wird dann langsam in einen Liter Aceton unter Rühren eingetragen, wobei ein weisser flockiger Niederschlag entsteht. Dieser wird abgesaugt, mit Aceton nachgewaschen und schliesslich bis zur Gewichtskonstanz getrocknet (30° C, 10 Pa). Es verbleiben 6.9 g Feststoff (Ausbeute 58 Gew. %).

### Beispiel 8

5.2 g eines gemäss Beispiel 1 oder 3 hergestellten Terpolymers, enthaltend 26 Gew. % VP, 16 Gew. % VAc und 58 Gew. % VA, werden in 47 g wasserfreiem DMSO gelöst. Hierzu werden unter Rühren bei RT 1.3 g IEM gegeben, und dann für 18 Stunden auf 40° C erwärmt. Eine IR-spektroskopische Messung zeigt nach der genannten Reaktionszeit keine NCO-Bande bei 2270 cm⁻¹. Die Reaktionslösung wird dann langsam in einen halben Liter Aceton unter Rühren eingetragen, wobei ein weisser flockiger Niederschlag entsteht. Dieser wird abgesaugt, mit Aceton nachgewaschen und schliesslich bis zur Gewichtskonstanz getrocknet (30° C, 10 Pa). Es verbleiben 4.5 g Feststoff (Ausbeute 69 Gew. %).

### Beispiel 9

4.13 g eines gemäss Beispiel 1 oder 3 hergestellten Terpolymers, enthaltend 28 Gew. % VP, 21 Gew. % VAc und 51 Gew. % VA, werden in 37.3 g DMA gelöst und 0.6 g (5.9 mmol) wasserfreies Triethylamin zugegeben. Hierzu wird unter Rühren bei RT 0.62 g (5.9 mmol) Methacrylsäurechlorid gegeben, und dann für 25 Stunden auf 40° C erwärmt. (Endpunktbestimmung mittels Titration, Säurechloridnachweis mit 0.1 N NaOH). Die Reaktionslösung wird dann langsam in einen halben Liter Aceton unter Rühren eingetragen, wobei ein weisser flockiger Niederschlag entsteht. Dieser wird abgesaugt, mit Aceton nachgewaschen und schliesslich bis zur Gewichtskonstanz getrocknet (30° C, 10 Pa). Es muss auf strikten Lichtausschluss geachtet werden. Es verbleiben 2.7 g Feststoff (Ausbeute 60 Gew. %). Das so modifizierte Präpolymer ist gut löslich in Wasser, Alkohol, DMF, DMA und DMSO.

### Beispiel 10

Wässrige Lösungen von gemäss den Beispielen 8 und 9 hergestellten modifizierten Präpolymeren werden mit 0.3 Gew. % Irgacure®2959 (berechnet auf den Polymergehalt) versetzt. Mit diesen Lösungen werden Kontaktlinsenförmchen (Moulds) gefüllt, verschlossen, und dann mit einer Hönle Hg-Mitteldrucklampe (3200 W) bestrahlt. Die Bestrahlungsintensität beträgt 50 - 100 mW/cm², gemessen mit einem Hönle UV-C-Detektor im Wellenlängenbereich von 200 - 280 nm. Die Vernetzung der Präpolymere erfolgt ab 1 Sekunde.

### Beispiel 11

In Analogie zu Beispiel 8 werden diverse Terpolymere mit unterschiedlichem Gehalt an VP, VAc und VA mit IEM modifiziert, und dann in Analogie zu Beispiel 10 vernetzt. Die nachfolgende Tabelle gibt Aufschluss über die Zusammensetzung und den Wassergehalt von solchen Hydrogelen.

| VP-Gehalt % | VA-Gehalt % | Vernetzergehalt % (VA-IEM) | Wassergehalt % Hydrogel |
|---|---|---|---|
| 23 | 55 | 6 | 74±2 |
| 44 | 21 | 9 | 76±2 |
| 69 | 18 | 8 | 74±2 |
| 38 | 30 | 17 | 67±2 |
| 45 | 22 | 5 | 80±2 |
| 22 | 52 | 11 | 70±2 |
| 33 | 18 | 30 | 62±2 |

### Beispiel 12

Es werden in Analogie zu Beispiel 11 diverse vernetzte Polymere nachstehender Zusammensetzung in Scheibchenform (als Scheibchen-Mold) hergestellt. Die nachfolgende Tabelle gibt Aufschluss über die Zusammensetzung sowie den Wassergehalt.

| VP | VAc | VA | Vernetzer (VA-IEM) | Wassergehalt |
|---|---|---|---|---|
| 38 | 15 | 30 | 17 | 67% |
| 40 | 17 | 29 | 14 | 70% |
| Vergleichskontaktlinsen | | | | |
| Weicon 38 E (Poly-HEMA) | | | | 38% |
| New Vues® | | | | 59% |

### Beispiel 13 Herstellung von:

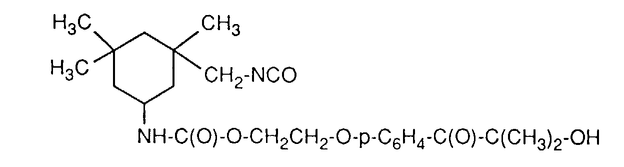

In einem 500 ml Kolben mit Rückflusskühler, Thermometer, Rührer und Stickstoffeinleitungsrohr wird unter Stickstoff eine Lösung von 11,125 g (0,05 Mol) frisch destilliertem Isophorondiisocyanat (IPDI) in 50 ml trockenem Methylenchlorid mit einer Lösung von 11,2 g (0,05 Mol) 4'-(β-Hydroxyethoxy)-2-hydroxyprop-2-yl-phenon (Irgacure 2959®) in 300 ml trockenem Methylenchlorid gemischt und 48 Stunden bei 40° C gerührt. Der Verlauf der Umsetzung wird mittels Dünnschichtchromatographie auf Kieselgelplatten (60 F₂₅₄, Art. 5719 Merck) verfolgt (Laufmittel: Toluol/Acetonitril 7:3). Das entstandene Produkt wird durch Säulenchromatographie an Kieselgel 60 (Eluent Toluol/Acetonitril 7:3) von geringen Mengen an nicht umgesetztem Irgacure®2959 und Bisaddukt von IPDI befreit. Nach Eindampfen der reinen Fraktionen am Rotationsverdampfer wird ein farbloses Oel erhalten, das beim Abkühlen auf -16°C langsam kristallisiert und anschliessend aus trockenem Diethylether umkristallisiert wird. Es werden 15,6 g eines weissen kristallinen Produktes erhalten (70 % d. Th.), das einen Schmelzpunkt von 76°C aufweist.

Der Isocyanatgehalt des Produktes wird durch Titration mit Dibutylamin in Toluol ermittelt: berechnet 2,242 mVal/g, gefunden 2,25 m Val/g. Die Methode ist in "Analytical Chemistry of Polyurethanes" (High Polymer Series XVI/Part III, D.S. David + H.B. Staley editors, Interscience Publishers, New York 1969 p. 86) beschrieben.

### Beispiel 14

Unter Lichtausschluss und in Analogie zu Beispiel 8 werden 4.07 g eines gemäss Beispiel 1 oder 3 hergestellten Terpolymers, enthaltend 28 Gew. % VP, 21 Gew. % VAc und 51 Gew. % VA, in 40 g wasserfreiem DMSO gelöst. Hierzu wird unter Rühren bei RT eine Lösung von 1.02 g IEM und 18.3 mg Photoinitiatorderivat aus Beispiel 13 in 6 ml DMSO gegeben, und dann für 18 Stunden auf 40° C erwärmt. Eine IR-spektroskopische Messung zeigt nach der genannten Reaktionszeit keine NCO-Bande bei 2270 cm⁻¹. Die Reaktionslösung wird dann (immer unter Lichtausschluss) langsam in einen halben Liter Aceton unter Rühren eingetragen, wobei ein weisser flockiger Niederschlag entsteht. Dieser wird abgesaugt, mit Aceton nachgewaschen und schliesslich bis zur Gewichtskonstanz getrocknet (30° C, 10 Pa). Es verbleiben 3.71 g Feststoff (Ausbeute 73 Gew. %). Das so modifizierte Präpolymer ist gut löslich in Wasser, Alkohol, DMF, DMA und DMSO.

## Patentansprüche

1. Wasserlösliches vernetzbares Präpolymer, enthaltend in der Copolymerkette Einheiten, die von folgenden Monomerbausteinen abgeleitet sind; einem Vinyllactam (a), Vinylalkohol (b), gegebenenfalls einem Niederalkancarbonsäurevinylester (c), einem vinylischen Vernetzer (d) und gegebenenfalls einem vinylischen Photoinitiator (e).

2. Präpolymer gemäss Anspruch 1, enthaltend
5 - 85 Gewichtsprozent eines Vinyllactams (a),
3 - 80 Gewichtsprozent Vinylalkohol (b),
0 - 65 Gewichtsprozent eines Niederalkancarbonsäurevinylesters (c),
3 - 40 Gewichtsprozent eines vinylischen Vernetzers (d) und
0 - 5 Gewichtsprozent eines vinylischen Photoinitiators (e).

3. Präpolymer gemäss Anspruch 1, enthaltend
10 - 75 Gewichtsprozent eines Vinyllactams (a),
10 - 65 Gewichtsprozent Vinylalkohol (b),
2 - 40 Gewichtsprozent eines Niederalkancarbonsäurevinylesters (c),
5 - 35 Gewichtsprozent eines vinylischen Vernetzers (d) und
0 - 3 Gewichtsprozent eines vinylischen Photoinitiators (e).

4. Präpolymer gemäss Anspruch 1, enthaltend
20 - 70 Gewichtsprozent eines Vinyllactams (a),
15 - 60 Gewichtsprozent Vinylalkohol (b),
5 - 30 Gewichtsprozent eines Niederalkancarbonsäurevinylesters (c),
7 - 30 Gewichtsprozent eines vinylischen Vernetzers (d) und
0 - 2 Gewichtsprozent eines vinylischen Photoinitiators (e).

5. Präpolymer gemäss Anspruch 1, wobei Vinyllactam (a) ein fünf bis siebengliedriges Lactam der Formel (I) darstellt, 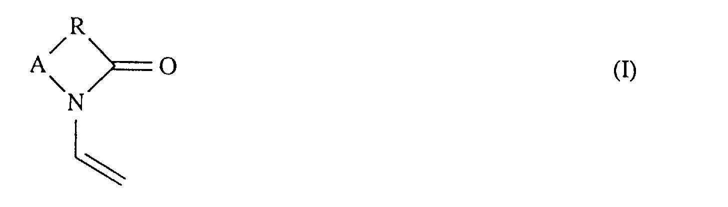 worin R für lineares oder, gegebenenfalls mehrfach, verzweigtes Alkylen oder Alkenylen mit 2 bis 8 Kohlenstoffatomen steht, und A für CO oder CR¹R² steht, wobei R¹ Wasserstoff, Niederalkyl, Aryl, Aralkyl oder Alkaryl bedeutet, und R² für Wasserstoff oder Niederalkyl steht.

6. Präpolymer gemäss Anspruch 5, wobei das Vinyllactam (a) 4 bis 6 Kohlenstoffatome im heterocyclischen Ring enthält.

7. Präpolymer gemäss Anspruch 5, wobei das Vinyllactam (a) 4 Kohlenstoffatome im heterocyclischen Ring.

8. Präpolymer gemäss Anspruch 5, wobei das Vinyllactam (a) 4 Kohlenstoffatome im heterocyclischen Ring enthält, und worin R¹ für Wasserstoff oder Niederalkyl steht.

9. Präpolymer gemäss Anspruch 5, wobei das Vinyllactam (a) 4 Kohlenstoffatome im heterocyclischen Ring enthält, und worin R¹ und R² unabhängig voneinander für Wasserstoff oder Niederalkyl stehen.

10. Präpolymer gemäss Anspruch 1, wobei der Niederalkancarbonsäurevinylester für Vinylacetat, Vinylpropionat oder für ein Gemisch der genannten Ester steht.

11. Präpolymer gemäss Anspruch 1, wobei der vinylische Vernetzer (d) ein Derivat der Formel (II) darstellt,
R³-(CO)ₙ-(X¹-B-X¹-CO)ₘ-(X¹-B-X-CO)ₚ-O-CH=CH₂ (II)
worin R³ eine radikalisch polymerisierbare Kohlenwasserstoffgruppe bedeutet; n, m und p unabhängig voneinander null oder 1 sind; B unabhängig voneinander ein Diradikal mit bis zu 20 C-Atomen darstellt; X¹ unabhängig voneinander für -O-, -NH- oder eine Einfachbindung steht; und X für NH oder eine Einfachbindung steht.

12. Präpolymer gemäss Anspruch 11, wobei R³ für Alkenyl mit 2 bis 12 C-Atomen, bevorzugt für Alkenyl mit 2 bis 8 C-Atomen und insbesondere bevorzugt für Alkenyl mit 2 bis 4 C-Atomen steht.

13. Präpolymer gemäss Anspruch 11, wobei das Diradikal B unabhängig voneinander für Niederalkylen, Arylen, eine gesättigte bivalente cycloaliphatische Gruppe mit 6 bis 12 Kohlenstoffatomen, Alkylenarylen, Arylenalkylen oder Arylenalkylenarylen steht.

14. Präpolymer gemäss Anspruch 11, wobei R³ für Alkenyl mit 2 bis 8 C-Atomen steht; n, m und p unabhängig voneinander null oder 1 sind; B unabhängig voneinander für Niederalkylen, Arylen, eine gesättigte bivalente cycloaliphatische Gruppe mit 6 bis 12 Kohlenstoffatomen, Alkylenarylen, Arylenalkylen oder Arylenalkylenarylen steht; X¹ unabhängig voneinander für -O-, -NH- oder eine Einfachbindung steht; und X für NH oder eine Einfachbindung steht.

15. Präpolymer gemäss Anspruch 11, wobei R³ für Alkenyl mit 2 bis 8 C-Atomen steht; n, m und p unabhängig voneinander null oder 1 sind; B unabhängig voneinander für Niederalkylen, Arylen, eine gesättigte bivalente cycloaliphatische Gruppe mit 6 bis 12 Kohlenstoffatomen, Alkylenarylen oder Arylenalkylen steht; X¹ unabhängig voneinander für -O-, -NH- oder eine Einfachbindung steht; und X für NH oder eine Einfachbindung steht.

16. Präpolymer gemäss Anspruch 11, wobei R³ für Alkenyl mit 2 bis 8 C-Atomen steht; n, m und p unabhängig voneinander null oder 1 sind; B unabhängig voneinander für Niederalkylen, Arylen oder eine gesättigte bivalente cycloaliphatische Gruppe mit 6 bis 12 Kohlenstoffatomen steht; X¹ unabhängig voneinander für -O-, -NH- oder eine Einfachbindung steht; und X für NH oder eine Einfachbindung steht.

17. Präpolymer gemäss Anspruch 11, wobei R³ für Alkenyl mit 2 bis 8 C-Atomen steht; n = 1 oder 0 ist und m und p null sind.

18. Präpolymer gemäss Anspruch 11, wobei R³ für Alkenyl mit 2 bis 4 C-Atomen steht; m und n eins sind und p = 1 oder 0 ist; B unabhängig voneinander für Niederalkylen, Arylen oder eine gesättigte bivalente cycloaliphatische Gruppe mit 6 bis 12 Kohlenstoffatomen steht; X¹ unabhängig voneinander für -O-, -NH- oder eine Einfachbindung steht; und X NH oder eine Einfachbindung bedeutet.

19. Präpolymer gemäss Anspruch 1, wobei der vinylische Photoinitiator (e) ein Derivat der Formel (III) ist,
CH₂=CH-OCOX-B-XCOY-PI (III)
worin X unabhängig voneinander für NH oder eine Einfachbindung steht; Y für -O-, -S- oder -NH- steht; B ein Diradikal mit bis zu 20 C-Atomen darstellt; und PI für den um YH verminderten Rest eines Photoinitiators steht.

20. Präpolymer gemäss Anspruch 19, wobei X unabhängig voneinander für NH oder eine Einfachbindung steht; Y für -O- oder -NH- steht; B ein Diradikal darstellt und beispielsweise für Niederalkylen, Arylen, eine gesättigte bivalente cycloaliphatische Gruppe mit 6 bis 12 Kohlenstoffatomen, Alkylenarylen, Arylenalkylen oder Arylenalkylenarylen steht; und PI den um YH verminderten Rest eines Photoinitiators gemäss der Formel (IV) bedeutet.

21. Präpolymer gemäss Anspruch 19, wobei X unabhängig voneinander für NH oder eine Einfachbindung steht; Y für -O- steht; B ein Diradikal darstellt und beispielsweise für Niederalkylen, Arylen, eine gesättigte bivalente cycloaliphatische Gruppe mit 6 bis 12 Kohlenstoffatomen, Alkylenarylen, Arylenalkylen oder Arylenalkylenarylen steht; und PI den um YH verminderten Rest eines Photoinitiators gemäss der Formel (IV) bedeutet.

22. Präpolymer gemäss Anspruch 19, wobei X unabhängig voneinander für NH oder eine Einfachbindung steht; Y für -O- oder -NH- steht; B ein Diradikal darstellt und beispielsweise für Niederalkylen, Arylen oder eine gesättigte bivalente cycloaliphatische Gruppe mit 6 bis 12 Kohlenstoffatomen steht; und PI den um YH verminderten Rest eines Photoinitiators gemäss der Formel (IV) bedeutet.

23. Präpolymer gemäss Anspruch 19, wobei der Photoinitiator PI-YH eine Verbindung der Formel (IV) darstellt, 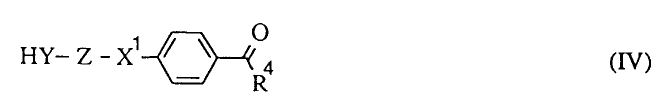 worin Y für -O-, -S- oder -NH- steht; X¹ -O-, -NH- oder eine Einfachbindung bedeutet; Z für Niederalkylen, Arylen, eine gesättigte bivalente cycloaliphatische Gruppe mit 6 bis 12 Kohlenstoffatomen, Alkylenarylen, Arylenalkylen oder Arylenalkylenarylen steht; und R⁴ für einen Rest der Formel (V) steht, 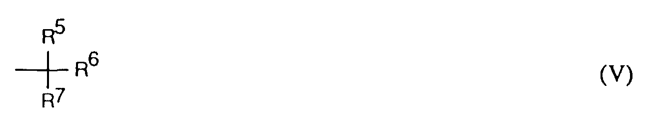 worin R⁵ für Niederalkyl oder Niederalkoxy steht; R⁶ ausgewählt ist unter Niederalkyl, Niederalkoxy und Aralkyl; und R⁷ für Hydroxy, Diniederalkylamino, Aryl oder Azacyclooxaalkyl steht.

24. Präpolymer gemäss Anspruch 23, wobei der Rest R⁴ ausgewählt ist unter

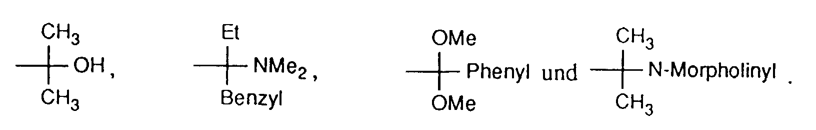

25. Verfahren zur Herstellung eines Präpolymers gemäss Anspruch 1, dadurch gekennzeichnet, dass ein Vinyllactam (a) - Niederalkancarbonsäurevinylester (c)- Präpolymer sauer oder alkalisch partiell oder vollständig hydrolisiert, und dann auf geeignete Art mit einer von einer Vernetzerkomponente (d) und gegebenenfalls mit einer von einer vinylischen Photoinitiatorkomponente (e) abgeleiteten Verbindung gleichzeitig oder nacheinander derivatisiert wird.

26. Hydrogel, dadurch gekennzeichnet, dass es im wesentlichen besteht aus einem gemäss Anspruch 4 offenbarten Präpolymer in vernetzter Form.

27. Polymeres Netzwerk, dadurch gekennzeichnet, dass es im wesentlichen besteht aus einem gemäss Anspruch 4 offenbarten Präpolymer in vernetzter Form.

28. Hydrogel, im wesentlichen bestehend aus einem Präpolymer gemäss der Definition in Anspruch 4 in vernetzter Form, wobei es sich um eine Kontaktlinse handelt

29. Kontaktlinse, bestehend im wesentlichen aus einem gemäss Anspruch 4 offenbarten Präpolymer in vernetztem Zustand.

30. Formkörper, bestehend im wesentlichen aus einem Präpolymer gemäss der Definition in Anspruch 4 in vernetztem Zustand.

## Claims

1. A water-soluble crosslinkable prepolymer that comprises, in the copolymer chain, units derived from the following monomeric structural units: a vinyl lactam (a), vinyl alcohol (b), optionally a lower alkanecarboxylic acid vinyl ester (c), a vinylic crosslinking agent (d) and optionally a vinylic photoinitiator (e).

2. A prepolymer according to claim 1, comprising
from 5 to 85 % by weight of a vinyl lactam (a),
from 3 to 80 % by weight of vinyl alcohol (b),
from 0 to 65 % by weight of a lower alkanecarboxylic acid vinyl ester (c),
from 3 to 40 % by weight of a vinylic crosslinking agent (d) and
from 0 to 5 % by weight of a vinylic photoinitiator (e).

3. A prepolymer according to claim 1, comprising
from 10 to 75 % by weight of a vinyl lactam (a),
from 10 to 65 % by weight of vinyl alcohol (b),
from 2 to 40 % by weight of a lower alkanecarboxylic acid vinyl ester (c),
from 5 to 35 % by weight of a vinylic crosslinking agent (d) and
from 0 to 3 % by weight of a vinylic photoinitiator (e).

4. A prepolymer according to claim 1, comprising
from 20 to 70 % by weight of a vinyl lactam (a),
from 15 to 60 % by weight of vinyl alcohol (b),
from 5 to 30 % by weight of a lower alkanecarboxylic acid vinyl ester (c),
from 7 to 30 % by weight of a vinylic crosslinking agent (d) and
from 0 to 2 % by weight of a vinylic photoinitiator (e).

5. A prepolymer according to claim 1, wherein the vinyl lactam (a) is a five- to seven-membered lactam of formula (1) 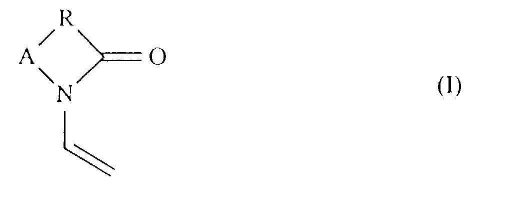 wherein
R is alkylene or alkenylene having from 2 to 8 carbon atoms that is linear or has one or more branches, and
A is CO or CR¹R², wherein R¹ is hydrogen, lower alkyl, aryl, aralkyl or alkaryl and R² is hydrogen or lower alkyl.

6. A prepolymer according to claim 5, wherein the vinyl lactam (a) contains from 4 to 6 carbon atoms in the heterocyclic ring.

7. A prepolymer according to claim 5, wherein the vinyl lactam (a) contains 4 carbon atoms in the heterocyclic ring.

8. A prepolymer according to claim 5, wherein the vinyl lactam (a) contains 4 carbon atoms in the heterocyclic ring and wherein R¹ is hydrogen or lower alkyl.

9. A prepolymer according to claim 5, wherein the vinyl lactam (a) contains 4 carbon atoms in the heterocyclic ring and wherein R¹ and R² are each independently of the other hydrogen or lower alkyl.

10. A prepolymer according to claim 1, wherein the lower alkanecarboxylic acid vinyl ester is vinyl acetate, vinyl propionate or a mixture of the mentioned esters.

11. A prepolymer according to claim 1, wherein the vinylic crosslinking agent (d) is a derivative of formula (II)
R³-(CO)ₙ-(X¹-B-X¹-CO)ₘ-(X¹-B-X-CO)ₚ-O-CH=CH₂ (II)
wherein
R³ is a radically polymerisable hydrocarbon group;
n, m and p are each independently of the others zero or 1;
the components B are each independently of the other a diradical having up to 20 carbon atoms;
the components X¹ are each independently of the others -O-, -NH- or a single bond; and
X is NH or a single bond.

12. A prepolymer according to claim 11, wherein R³ is alkenyl having from 2 to 12 carbon atoms, preferably alkenyl having from 2 to 8 carbon atoms and especially alkenyl having from 2 to 4 carbon atoms.

13. A prepolymer according to claim 11, wherein the diradical B is independently of the other lower alkylene, arylene, a saturated divalent cycloaliphatic group having from 6 to 12 carbon atoms, alkylenearylene, arylenealkylene or arylenealkylenearylene.

14. A prepolymer according to claim 11, wherein R³ is alkenyl having from 2 to 8 carbon atoms; n, m and p are each independently of the others zero or 1; the components B are each independently of the other lower alkylene, arylene, a saturated divalent cycloaliphatic group having from 6 to 12 carbon atoms, alkylenearylene, arylenealkylene or arylenealkylenearylene; the components X¹ are each independently of the others -O-, -NH- or a single bond; and X is NH or a single bond.

15. A prepolymer according to claim 11, wherein R³ is alkenyl having from 2 to 8 carbon atoms; n, m and p are each independently of the others zero or 1; the components B are each independently of the other lower alkylene, arylene, a saturated divalent cycloaliphatic group having from 6 to 12 carbon atoms, alkylenearylene or arylenealkylene; the components X¹ are each independently of the others -O-, -NH- or a single bond; and X is NH or a single bond.

16. A prepolymer according to claim 11, wherein R³ is alkenyl having from 2 to 8 carbon atoms; n, m and p are each independently of the others zero or 1; the components B are each independently of the other lower alkylene, arylene or a saturated divalent cycloaliphatic group having from 6 to 12 carbon atoms; the components X¹ are each independently ofthe others -O-, -NH- or a single bond; and X is NH or a single bond.

17. A prepolymer according to claim 11, wherein R³ is alkenyl having from 2 to 8 carbon atoms; n is 1 or 0; and m and p are zero.

18. A prepolymer according to claim 11, wherein R³ is alkenyl having from 2 to 4 carbon atoms; m and n are l and p is 1 or 0; the components B are each independently of the other lower alkylene, arylene or a saturated divalent cycloaliphatic group having from 6 to 12 carbon atoms; the components X' are each independently of the others -O-, -NH- or a single bond; and X is NH or a single bond.

19. A prepolymer according to claim 1, wherein the vinylic photoinitiator (e) is a derivative of formula (III)
CH₂=CH-OCOX-B-XCOY-PI (III)
wherein
the components X are each independently of the other NH or a single bond;
Y is -O-, -S- or -NH-;
B is a diradical having up to 20 carbon atoms; and
PI is a radical of a photoinitiator minus YH.

20. A prepolymer according to claim 19, wherein the components X are each independently of the other NH or a single bond; Y is -O- or -NH-; B is a diradical and is, for example, lower alkylene, arylene, a saturated divalent cycloaliphatic group having from 6 to 12 carbon atoms, alkylenearylene, arylenealkylene or arylenealkylenearylene; and PI is the radical of a photoinitiator according to formula (IV) minus YH.

21. A prepolymer according to claim 19, wherein the components X are each independently of the other NH or a single bond; Y is -O-; B is a diradical and is, for example, lower alkylene, arylene, a saturated divalent cycloaliphatic group having from 6 to 12 carbon atoms, alkylenearylene, arylenealkylene or arylenealkylenearylene; and PI is the radical of a photoinitiator according to formula (IV) minus YH.

22. A prepolymer according to claim 19, wherein the components X are each independently of the other NH or a single bond; Y is -O- or -NH-; B is a diradical and is, for example, lower alkylene, arylene or a saturated divalent cycloaliphatic group having from 6 to 12 carbon atoms; and PI is the radical of a photoinitiator according to formula (IV) minus YH.

23. A prepolymer according to claim 19, wherein the photoinitiator PI-YH is a compound of formula (IV) 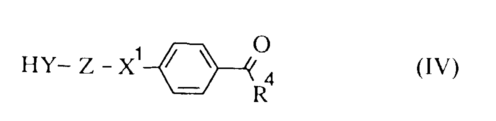 wherein
Y is -O-, -S- or -NH-;
X¹ is -O-, -NH- or a single bond;
Z is lower alkylene, arylene, a saturated divalent cycloaliphatic group having from 6 to 12 carbon atoms, alkylenearylene, arylenealkylene or arylenealkylenearylene; and
R⁴ is a radical of formula (V) 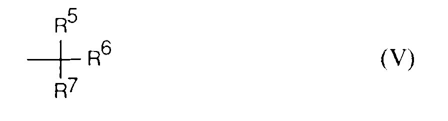
wherein
R⁵ is lower alkyl or lower alkoxy;
R⁶ is selected from lower alkyl lower alkoxy and aralkyl; and
R⁷ is hydroxy, di-lower alkylamino, aryl or azacyclooxaalkyl.

24. A prepolymer according to claim 23, wherein the radical R⁴ is selected from

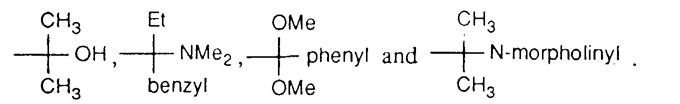

25. A process for the preparation of a prepolymer according to claim 1, which comprises subjecting a vinyl lactam (a)-lower alkanecarboxylic acid vinyl ester (c) prepolymer to partial or complete acid or alkaline hydrolysis and then derivatising it in a suitable manner, either at the same time or in succession, with a compound derived from a crosslinking component (d) and, optionally, with a compound derived from a vinylic photoinitiator component (e).

26. A hydrogel consisting essentially of a prepolymer disclosed according to claim 4 in crosslinked form.

27. A polymeric network consisting essentially of a prepolymer disclosed according to claim 4 in crosslinked form.

28. A hydrogel consisting essentially of a prepolymer according to the definition given in claim 4 in crosslinked form, the hydrogel being a contact lens.

29. A contact lens consisting essentially of a prepolymer disclosed according to claim 4 in the crosslinked state.

30. A moulded article consisting essentially of a prepolymer according to the definition given in claim 4 in the crosslinked state.

## Revendications

1. Prépolymère réticulable soluble dans l'eau contenant dans la chaîne copolymère des unités qui dérivent des constituants monomères suivants : un vinyllactame (a), un alcool vinylique (b), le cas échéant un ester vinylique d'acide alcane inférieur carboxylique (c), un agent réticulant vinylique (d) et, le cas échéant, un photoinitiateur vinylique (e).

2. Prépolymère selon la revendication 1, contenant
5 - 85 % en poids d'un vinyllactame (a),
3 - 80 % en poids d'alcool vinylique (b),
0 - 65 % en poids d'un ester vinyliquc d'acide alcane inférieur carboxylique (c),
3 - 40 % en poids d'un agent réticulant vinylique (d), et
0 - 5 % en poids d'un photoinitiateur vinylique (e).

3. Prépolymère selon la revendication 1, contenant
10 - 75 % en poids d'un vinyllactame (a),
10 - 65 % en poids d'alcool vinylique (b),
2 - 40 % en poids d'un ester vinylique d'acide alcane inférieur carboxylique (c),
5 - 35 % en poids d'un agent réticulant vinylique (d), et
0 - 3 % en poids d'un photoinitiateur vinylique (e).

4. Prépolymère selon la revendication 1, contenant
20 - 70 % en poids d'un vinyllactame (a),
15- 60 % en poids d'alcool vinylique (b),
5 - 30 % en poids d'un ester vinylique d'acide alcane inférieur carboxylique (c),
7 - 30 % en poids d'un agent réticulant vinylique (d), et
0 - 2 % en poids d'un photoinitiateur vinylique (e).

5. Prépolymère selon la revendication 1, dans lequel le vinyllactame (a) représente un lactame à 5 à 7 chaînons de formule (I), 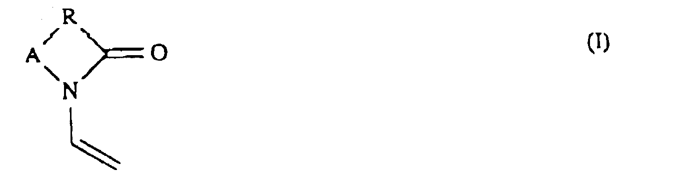 dans laquelle R représente un alkylène ou alcényléne linéaire ou le cas échéant (poly)ramifié ayant de 2 à 8 atomes de carbone, et A représente CO ou CR¹R², où R¹ représente un hydrogène, un alkyle inférieur, un aryle, un aralkyle ou un alcaryle, et R² représente un hydrogène ou un alkyle inférieur.

6. Prépolymère selon la revendication 5, dans lequel le vinyllactame (a) contient 4 à 6 atomes de carbone dans le noyau hétérocyclique.

7. Prépolymère selon la revendication 5, dans lequel le vinyllactame (a) contient quatre atomes de carbone dans le noyau hétérocyclique.

8. Prépolymère selon la revendication 5, dans lequel le vinyllactame (a) contient 4 atomes de carbone dans le noyau hétérocyclique, et dans lequel R¹ représente un hydrogène ou un alkyle inférieur.

9. Prépolymère selon la revendication 5, dans lequel le vinyllactame (a) contient 4 atomes de carbone dans le noyau hétérocyclique, et dans lequel R¹ et R² représentent indépendamment l'un de l'autre un hydrogène ou un alkyle inférieur.

10. Prépolymère selon la revendication 1, dans lequel l'ester vinylique de l'acide alcane inférieur carboxylique représente l'acétate de vinyle, le propionate de vinyle ou un mélange des esters mentionnés.

11. Prépolymère selon la revendication 1, dans lequel l'agent réticulant vinylique (d) représente un dérivé de formule (II),
R³-(CO)ₙ-(X¹-B-X¹-CO)ₘ-(X¹-B-X-CO)ₚ-O-CH=CH₂ (II)
dans laquelle R³ représente un groupe hydrocarboné polymérisable par voie radicalaire; n, m et p valent indépendamment l'un de l'autre 0 ou 1 ; les B représentent indépendamment l'un de l'autre un diradical comportant jusqu'à 20 atomes de carbone ; les X¹ représentent indépendamment l'un de l'autre -O- ou -NH-, ou une liaison simple ; et X représente NH ou une liaison simple.

12. Prépolymère selon la revendication 11, dans lequel R³ représente un alcényle ayant 2 à 12 atomes de carbone, de préférence un alcényle ayant 2 à 8 atomes de carbone et, de façon particulièrement préférée, un alcényle ayant 2 à 4 atomes de carbone.

13. Prépolymère selon la revendication 11, dans lequel les diradicaux B représentent indépendamment l'un de l'autre un alkylène inférieur, un arylène, un groupe cycloaliphatique bivalent saturé comportant 6 à 12 atomes de carbone, un alkylène arylène, un arylène alkylène ou un arylène alkylène arylène.

14. Prépolymère selon la revendication 11, dans lequel R³ représente un alcényle ayant 2 à 8 atomes de carbone; n, m et p valent indépendamment l'un de l'autre 0 ou 1 ; les B représentent indépendamment l'un de l'autre un alkylène inférieur, un arylène, un groupe cycloaliphatique bivalent saturé ayant 6 à 12 atomes de carbone, un alkylène arylène, un arylène alkylène ou un arylène alkylène arylène ; et les X¹ représentent indépendamment l'un de l'autre -O-, -NH- ou une liaison simple ; et X représente NH ou une liaison simple.

15. Prépolymère selon la revendication 11, dans lequel R³ représente un alcényle ayant 2 à 8 atomes de carbone; n, m et p valent indépendamment l'un de l'autre 0 ou 1 ; les B représentent indépendamment l'un de l'autre un alkylène inférieur, un arylène, un groupe cycloaliphatique bivalent saturé ayant 6 à 12 atomes de carbone, un alkylène arylène ou un arylène alkylène; et les X¹ représentent indépendamment l'un de l'autre -O-, -NH- ou une liaison simple ; et X représente NH ou une liaison simple.

16. Prépolymère selon la revendication 11, dans lequel R³ représente un alcényle ayant 2 à 8 atomes de carbone ; n, m et p valent indépendamment l'un de l'autre 0 ou 1 ; les B représentent indépendamment l'un de l'autre un alkylène inférieur, un arylène, ou un groupe cycloaliphatique bivalent saturé ayant 6 à 12 atomes de carbone ; et les X¹ représentent indépendamment l'un de l'autre -O-, -NH- ou une liaison simple ; et X représente NH ou une liaison simple.

17. Prépolymère selon la revendication 11, dans lequel R³ représente un alcényle ayant 2 à 8 atomes de carbone ; n = 1 ou 0 et m et p valent 0.

18. Prépolymère selon la revendication 11, dans lequel R³ représente un alcényle ayant 2 à 4 atomes de carbone; m et n valent 1 et p vaut 1 ou 0 ; les B représentent indépendamment l'un de l'autre un alkylène inférieur, un arylène, ou un groupe cycloaliphatique bivalent saturé ayant 6 à 12 atomes de carbone ; les X¹ représentent indépendamment l'un de l'autre -O-, -NH- ou une liaison simple ; et X représente NH ou une liaison simple.

19. Prépolymère selon la revendication 1, dans lequel le photoinitiateur vinylique (e) est un dérivé de formule (III),
CH₂=CH-OCOX-B-XCOY-PI (III)
dans laquelle les X représentent indépendamment l'un de l'autre NH ou une liaison simple ; Y représente -O-, -S- ou -NH- ; B représente un diradical ayant jusqu'à 20 atomes de carbone ; et PI représente le radical d'un photoinitiateur diminué d'YH.

20. Prépolymère selon la revendication 19, dans lequel les X représentent indépendamment l'un de l'autre NH ou une liaison simple ; Y représente -O- ou -NH- ; B représente un diradical, et représente par exemple un alkylène inférieur, un arylène, un groupe cycloaliphatique bivalent saturé ayant 6 à 12 atomes de carbone ; un alkylène arylène, un arylène alkylène, ou un arylène alkylène arylène ; et PI représente le radical d'un photoinitiateur selon la formule (IV) diminué d'YH.

21. Prépolymère selon la revendication 19, dans lequel les X représentent indépendamment l'un de l'autre NH ou une liaison simple ; Y représente -O- ; B représente un diradical, et représente par exemple un alkylène inférieur, un arylène, un groupe cycloaliphatique bivalent saturé ayant 6 à 12 atomes de carbone ; un alkylène arylène, un arylène alkylène, ou un arylène alkylène arylène ; et P1 représente le radical d'un photoinitiateur selon la formule (IV) diminué d'YH.

22. Prépolymère selon la revendication 19, dans lequel les X représentent indépendamment l'un de l'autre NH ou une liaison simple ; Y représente -O- ou -NH- ; B représente un diradical, et représente par exemple un alkylène inférieur, un arylène ou un groupe cycloaliphatique bivalent saturé ayant 6 à 12 atomes de carbone ; et PI représente le radical d'un photoinitiateur selon la formule (IV) diminué d'YH.

23. Prépolymère selon la revendication 19, dans lequel le photoinitiateur PI-YH représente un composé de formule (IV), 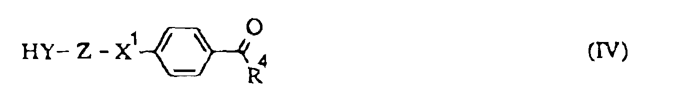 dans lequel Y représente -O-, -S- ou -NH- ; X¹ représente -O-, -NH- ou une liaison simple ; Z représente un alkylène inférieur, un arylène, un groupe cycloaliphatique bivalent saturé comportant 6 à 12 atomes de carbone, un alkylène arylène, un arylène alkylène ou un arylène alkylène arylène ; et R⁴ représente un radical de formule (V), 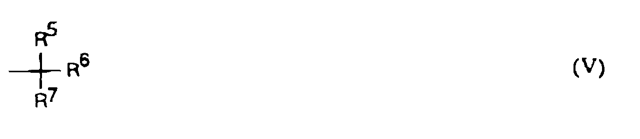 dans laquelle R⁵ représente un alkyle inférieur ou un alcoxy inférieur ; R⁶ est choisi parmi un alkyle inférieur, un alcoxy inférieur et un aralkyle ; et R⁷ représente un hydroxy, un dialkyle inférieur amino, un aryle ou un azacyclooxalkyle.

24. Prépolymère selon la revendication 23, dans lequel le radical R⁴ est choisi parmi

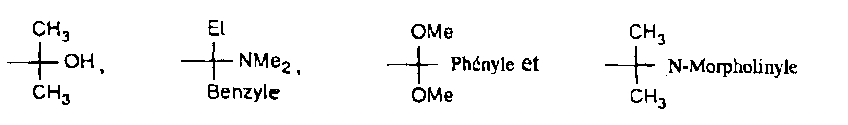

25. Procédé de préparation d'un prépolymère selon la revendication 1, caractérisé en ce qu'on fait subir une hydrolyse partielle ou complète, acide ou alcaline, à un prépolymère vinyllactame (a) -ester vinylique d'acide alcane inférieur carboxylique (c), puis en ce que, simultanément ou successivement, on le transforme en dérivé approprié de manière convenable avec un composé dérivé d'un composant réticulant (d) et, le cas échéant, avec un composé dérivé d'un composant photoinitiateur vinylique (e).

26. Hydrogel, caractérisé en ce qu'il se compose pour l'essentiel d'un prépolymère divulgué selon la revendication 4 sous forme réticulée.

27. Réseau polymère, caractérisé en ce qu'il se compose pour l'essentiel d'un prépolymère divulgué selon la revendication 4 sous forme réticulée.

28. Hydrogel, constitué pour l'essentiel d'un prépolymère selon la définition de la revendication 4 sous forme réticulée, et où il s'agit d'une lentille de contact.

29. Lentille de contact, constituée pour l'essentiel d'un prépolymère divulgué selon la revendication 4 à l'état réticulé.

30. Article moulé, constitué pour l'essentiel d'un prépolymère selon la définition de la revendication 4 à l'état réticulé.
